# EUROPEAN PATENT SPECIFICATION

(11) **EP 1 599 877 B1**
(45) Date of publication and mention of the grant of the patent: **20.09.2006**
(21) Application number: 04711427.7
(22) Date of filing: 16.02.2004
(51) Int. Cl.: G11B 7/24, G11B 7/00

(54) **MULTI-STACK FLUORESCENT INFORMATION CARRIER WITH ELECTROCHROMIC MATERIALS**
MEHRSTAPEL-FLUORESZENZINFORMATIONSTRÄGER MIT ELEKTROCHROMISCHEN MATERIALIEN
SUPPORT D'INFORMATIONS FLUORESCENT A PLUSIEURS EMPILEMENTS ET COMPRENANT DES MATERIAUX ELECTROCHROMES

(30) Priority: 27.02.2003 EP 03290473
(43) Date of publication of application: 30.11.2005
(73) Proprietor: Koninklijke Philips Electronics N.V., 5621 BA Eindhoven (NL)
(72) Inventor: WILDERBEEK, Johannes, Société Civile SPID, F-75008 Paris (FR); BALISTRERI, Marcello, Société Civile SPID, F-75008 Paris (FR); BUSCH, Christopher, Société Civile SPID, F-75008 Paris (FR)
(74) Representative: Chaffraix, Jean
(86) International application number: PCT/IB2004/000494
(87) International publication number: WO 2004/077423

(56) References cited:
- WO-A-99/24527
- WO-A-03/001516
- US-A- 4 842 381
- US-A- 5 279 932
- PATENT ABSTRACTS OF JAPAN vol. 1999, no. 12, 29 October 1999 (1999-10-29) -& JP 11 185288 A (AOKI TAKESHI), 9 July 1999 (1999-07-09)

## Description

### FIELD OF THE INVENTION

The present invention relates to a multi-stack fluorescent optical information carrier.

The present invention also relates to a scanning device for scanning a multi-stack fluorescent optical information carrier.

The present invention also relates to a method of reading from, a method of recording on and a method of erasing a multi-stack fluorescent optical information carrier.

The present invention is particularly relevant for optical data storage and optical disc apparatuses for reading and/or recording data from and/or on multi-stack fluorescent optical discs.

### BACKGROUND OF THE INVENTION

In the field of optical recording, increasing the capacity of the information carrier is the trend. An already investigated method of increasing the data capacity consists in using a plurality of information layers in the information carrier. For example, a DVD (Digital Video Disc) may comprise two information layers. Information is recorded on or read from an information layer by means of an optical beam, using local refractive index variations or the presence of surface relief structures.

However, the number of information layers in such an information carrier is limited. First, because the luminous intensity of the optical beam decreases with each additional addressed layer. Actually, when the optical beam has to pass many layers for addressing a layer, interaction takes place in the non-addressed layers, reducing the intensity of the optical beam. Additionally, the local refractive index variations of the written information patterns in the non-addressed layers cause refraction and scattering of the traversing light-beam, leading to deteriorated writing and reading.

In order to increase the number of layers of an information carrier, a fluorescent multi-layer information carrier has been proposed. Such a fluorescent multi-layer information carrier, as well as an optical disc apparatus for reading from this carrier, are described in patent US 6,009,065, granted on December 28, 1999.

The information is deposited or recorded in each information layer as a sequence of fluorescent and non-fluorescent cells, the fluorescent cells being made of a fluorescent material capable of generating a fluorescent radiation when interacting with an optical beam.

The layers of the carrier are separated by spacer layers, which are transparent for the wavelengths of the optical beam and the fluorescent radiation.

The optical beam is focused on a layer of the carrier by an objective lens. When a fluorescent cell of the addressed layer absorbs the energy of the optical beam, a fluorescence signal is generated. This fluorescence signal has a wavelength, which is different from the wavelength of the exciting beam, due to the so-called Stokes-shift. Hence, the interactions between the fluorescence signal and the non-addressed layer are relatively small, because the absorption of the non- addressed layers at the wavelength of the fluorescence signal is relatively small.

The fluorescence signal is then detected by a detector unit. The detector unit comprises means for separating the fluorescence signal coming from the addressed layer from the fluorescence signals coming from the non-addressed layers. For example, a confocal pinhole is arranged in front of a photodiode in order to spatially block the fluorescence signal coming from the non-addressed layers.

However, in order to generate a fluorescence signal, a fluorescent cell has to absorb energy from the optical beam. Hence, the absorption of a fluorescent cell has to be relatively high, for example 20 per cent. This leads to a reduction of the intensity of the optical beam traversing a plurality of layers, as well as refraction and scattering, which deteriorate read-out. The number of layers of such a multi-layer fluorescent information carrier is thus limited.

Document JP-A-11 185 288 (cf. the preamble of claim 1) discloses an information carrier comprising a plurality of information stacks, wherein each stack comprises an information layer and an electrochromic layer between two electrodes. The electrochromic layer comprises an electrolyte layer and a coloring layer.

Document WO-A-03 001516 describes an information carrier comprising a plurality of information stacks, wherein each stack comprises a liquid crystal layer between two electrodes, the liquid crystal layer comprising a fluorescent material.

### SUMMARY OF THE INVENTION

It is an object of the invention to provide an information carrier, which can comprise an increased number of layers.

To this end, the invention proposes an information carrier for scanning information by means of an optical beam having a wavelength, said information carrier comprising at least two information stacks, wherein each stack comprises a counter electrode, an electrolyte layer and an information layer comprising a fluorescent material and an electrochromic material whose optical properties at the wavelength of the optical beam depend on a potential difference applied between the information layer and the counter electrode.
According to the invention, the information layers comprise an electrochromic material, whose optical properties can be switched by applying a potential difference. Hence, by applying suitable potential differences to the stacks, it is possible to scan one layer having optical properties suitable for allowing absorption of energy from the optical beam, and hence emission of a fluorescence signal, whereas the optical properties of the other layers are chosen such that the interactions between these non-addressed layers and the optical beam are reduced. As a consequence, the number of layers can be increased.

In an advantageous embodiment of the invention, an information layer serves as counter electrode for another information layer. This reduces the number of layers of the stacks. Hence, the information carrier is less bulky, and the manufacturing process of the information carriers is simplified.

In a preferred embodiment of the invention, the information carrier comprises pits and lands, and the pits are filled by the fluorescent material. Such an information carrier may be manufactured according to conventional techniques. According to this preferred embodiment, the information is written during the manufacturing process. As it will be explained in more detail in the following, the switching of layers renders it possible to obtain only one layer interacting with the optical beam during reading of the information carrier. Hence, the number of information layers in such an information carrier can be relatively high.

In another preferred embodiment of the invention, one and the same material is used as the fluorescent and the electrochromic material. This limits the number of materials used, which simplifies the manufacturing process.

In another advantageous embodiment of the invention, the electrochromic material has an ability to take up or release electrons, which ability can be locally reduced by means of the optical beam in order to write information on the information layer. According to this embodiment, information can be written on the information carrier by a user.

In yet another advantageous embodiment of the invention, the fluorescent material has an ability to emit light by fluorescence, which ability can be locally reduced by means of the optical beam in order to write information on the information layer. According to this embodiment, information can again be written on the information carrier by a user.

In another preferred embodiment of the invention, the electrolyte layer has a temperature-dependent mobility threshold. According to this embodiment, information might be written by a user, then erased and rewritten on the information carrier.

Advantageously, the information layer further comprises a thermochromic material having temperature-dependent optical properties at the wavelength of the optical beam. When the electrolyte layer has a temperature-dependent mobility threshold, allowing rewriting of information on the information carrier, the layers of the information carrier all have the same optical properties during read-out of the information carrier. Hence, the non-addressed layers interact with the optical beam, which reduces the possible number of layers. The use of a thermochromic material allows reduces the interaction between the optical beam and the layers, because the thermochromic material improves the interaction between the optical beam and the addressed layer.

Preferably, an information stack further comprises a photoconductive layer for allowing a transfer of electrons in the information layer when illuminated at the wavelength of the optical beam. When the electrolyte layer has a temperature-dependent mobility threshold, allowing the writing of marks on the information carrier, the diffusion of heat in the electrolyte during writing of information will make the marks relatively large. The use of a photoconductive layer reduces the size of the written marks, hence increasing the data capacity of the information carrier.

The invention also relates to an optical scanning device for scanning an information carrier by means of an optical beam having a wavelength, said information carrier comprising at least two information stacks, wherein each stack comprises a counter electrode, an electrolyte layer and an information layer comprising a fluorescent material and an electrochromic material whose optical properties at the wavelength of the optical beam depend on a potential difference applied between the information layer and the counter electrode, said optical scanning device comprising means for generating the optical beam, means for focusing said optical beam on an information layer, means for applying a potential difference between the information layer and the counter electrode of a stack and means for detecting a fluorescence signal.

Advantageously, the optical device comprises a clamper for receiving the information carrier, said clamper comprising contacts for applying a potential difference between the information layer and the counter electrode of a stack. Hence, a conventional optical device may be used for scanning information carriers according to the invention, through the addition of contacts in the clamper of said conventional optical device, and means for applying potential differences between these contacts.

The invention also relates to a method of reading information from an information carrier by means of an optical beam having a wavelength, said information carrier comprising at least two information stacks, wherein each stack comprises a counter electrode, an electrolyte layer and an information layer comprising a fluorescent material and an electrochromic material whose optical properties at the wavelength of the optical beam depend on a potential difference applied between the information layer and the counter electrode, said method comprising the steps of applying a potential difference between the information layer and the counter electrode of the information stack from which information is to be read and focusing the optical beam on the information layer of said stack.

The invention further relates to a method of recording information on an information carrier by means of an optical beam having a wavelength, said information carrier comprising at least two information stacks, wherein each stack comprises a counter electrode, an electrolyte layer and an information layer comprising a fluorescent material and an electrochromic material whose optical properties at the wavelength of the optical beam depend on a potential difference applied between the information layer and the counter electrode, said method comprising the step of focusing the optical beam on the information layer of the information stack on which information is to be recorded in order to locally reduce the ability to take up or release electrons of the electrochromic material and/or the ability of the fluorescent material to emit light by fluorescence.

The invention also relates to a method of recording information on an information carrier by means of an optical beam having a wavelength, said information carrier comprising at least two information stacks, wherein each stack comprises a counter electrode, an electrolyte layer having a temperature-dependent mobility threshold and an information layer comprising a fluorescent material and an electrochromic material whose optical properties at the wavelength of the optical beam depend on a potential difference applied between the information layer and the counter electrode, said method comprising the steps of focusing the optical beam on the information layer of the information stack on which information is to be recorded in order to locally heat the electrolyte layer of said stack above said mobility threshold, and applying a potential difference between the information layer and the counter electrode of said stack.

The invention further relates to a method of erasing information from an information layer where information has been recorded according to the method described above, said method of erasing comprising the steps of heating the electrolyte layer of said stack above said mobility threshold by means of the optical beam, and applying a reverse potential difference between the information layer and the counter electrode of said stack.

These and other aspects of the invention will be apparent from and will be elucidated with reference to the embodiments described hereinafter.

### BRIEF DESCRIPTION OF THE DRAWINGS

The invention will now be described in more detail, by way of example, with reference to the accompanying drawings, in which:
- Figs. 1a and 1b show a first ROM information carrier in accordance with the invention;
- Figs. 2a, 2b, and 2c show a second, a third and a fourth ROM information carrier in accordance with the invention;
- Fig. 3a and 3b show a fifth and a sixth ROM information carrier in accordance with the invention;
- Figs. 4a, 4b and 4c show a first, a second and a third ROM information carrier in accordance with an advantageous embodiment of the invention;
- Fig. 5 shows a WORM information carrier in accordance with the invention;
- Figs. 6a and 6b show a first and a second RW information carriers in accordance with the invention; and
- Fig. 7 shows an optical device in accordance with the invention.

### DETAILED DESCRIPTION OF THE INVENTION

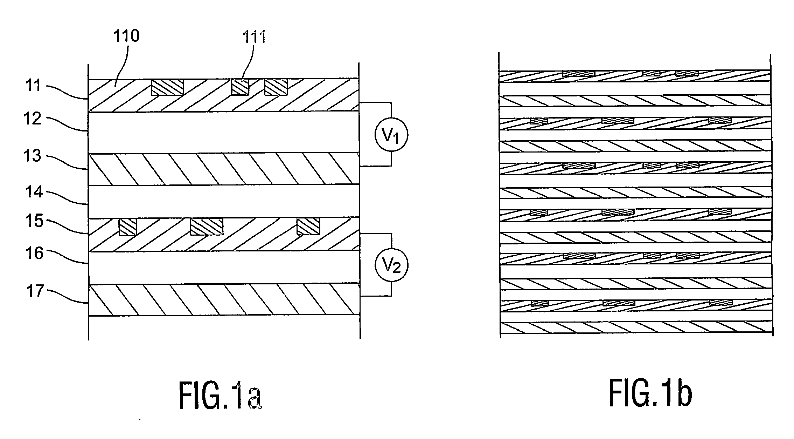

A first ROM information carrier in accordance with the invention is depicted in Fig.la. Such an information carrier comprises a first information layer 11, a first electrolyte layer 12, a first counter electrode 13, a spacer layer 14, a second information layer 15, a second electrolyte layer 16 and a second counter electrode 17. The first information layer 11, the first electrolyte layer 12 and the first counter electrode 13 form a first information stack, the second information layer 15, the second electrolyte layer 16 and the second counter electrode 17 form a second information stack. The two information stacks are separated by the spacer layer 14. An information carrier in accordance with the invention may comprise more than two information stacks. For example, an information carrier in accordance with the invention may comprise 10, 20 or up to 100 or more information stacks. For example, an information carrier in accordance with the invention, which comprises 6 information stacks, is depicted in Fig. 1b

An information layer comprises pits and lands, the pits being filled by a fluorescent material, the lands comprising an electrochromic material. For example, the first information layer 11 comprises lands 110, which comprise an electrochromic material, and pits 111, which comprise a fluorescent material.

This information carrier is a ROM (Read Only Memory) information carrier, which means that a user cannot record information on this carrier. The information is recorded during a manufacturing process and cannot be erased. Such an information carrier is manufactured by means of conventional techniques, such as those described in patent WO 98/50914.

For example, a stamper comprising a plurality of convexities is applied to a layer comprising the electrochromic material. This results in a pattern on the surface of this layer, said pattern being similar to the convexities of the stamper. Then, a layer comprising the fluorescent material is deposited on the surface of the patterned layer. This layer comprising the fluorescent material is chosen so as to have good adhesion properties to the patterned layer. A portion of this layer penetrates into the pits of the patterned layer and another portion remains on the surface of the lands of the patterned layer. This other portion is then eliminated by means of a suitable solvent. The second information layer 15 is thus obtained, which comprises lands comprising the electrochromic material, and pits filled with the fluorescent material. These pits filled with the fluorescent material are fluorescent cells, which comprise the information recorded on the second information layer 15. Then, the second information layer 15 is coated with the spacer layer 14, the first counter electrode 13, the first electrolyte layer 12 and a layer comprising an electrochromic material. A stamper comprising a plurality of convexities is then applied to this layer comprising the electrochromic material, and the operations described above are repeated in order to obtain the first information layer 11 comprising lands 110 with the electrochromic material and pits 111 filled with the fluorescent material. These operations can then be repeated in order to obtain an information carrier comprising a plurality of information stacks. Such an information carrier may also be manufactured by means of an injection molding technique, as described in WO 98/50914.

This information carrier is intended to be scanned by an optical beam, which has a wavelength 11. The first and second electrolyte layers 12 and 16, the first and second counter electrodes 13 and 17, the spacer layer 14, as well as the fluorescent material are chosen so as to be transparent at the wavelength 11, or at least to have a very small absorption at this wavelength, in order not to interact with the optical beam.

The first and second information layers 11 and 15 comprise an electrochromic material. An electrochromic material is a material having optical properties, which can change as a result of electron uptake or loss. Electrochromic materials are known to those skilled in the art. For example, the publication "Electrochromism: Fundamentals and Applications", by Paul M.S. Monk et al., published in 1995, describes the properties of electrochromic materials. Preferably, the electrochromic materials used in an information carrier in accordance with the invention are thiophene derivatives, such as poly(3,4-ethylenedioxythiophene), also called PEDT or PEDOT and described, for example, in "Poly(3,4-ethylenedioxythiophene) and Its Derivatives: Past, Present and Future", by L. Bert Goenendaal et al., published in Advanced Materials 2000, 12, No.7.

In the example of Fig.1, the electrochromic material of the first and second information layers 11 and 15 is the same, and has a reduced state and an oxidized state. The electrochromic material is chosen to have a high absorption and reflection at the wavelength 11 when it is in its reduced state, and a low absorption and reflection at the wavelength 11 when it is in its oxidized state. Of course, an alternative electrochromic material may be used, which has a high absorption and reflection at the wavelength 11 when it is in its oxidized state, and a low absorption and reflection at the wavelength 11 when it is in its reduced state.

When the first information layer 11 is scanned for reading information from this first information layer 11, a potential difference V1 is applied between the first information layer 11 and the first counter electrode 13, the first information layer 11 being at a higher potential than the first counter electrode 13. A current flows from the first information layer 11 to the first counter electrode 13, whereas electrons are transported from the first counter electrode 13 to the first information layer 11. Electrons are absorbed by the electrochromic material of the first information layer 11, which becomes reduced. For reasons of electrical neutrality, positive ions from the first electrolyte layer 12 are absorbed by the first information layer 11 or negative ions are expelled by the first information layer 11, and negative ions from the first electrolyte layer 12 are absorbed by the first counter electrode 13 or positive ions are expelled by the first counter electrode 13. Hence, the first counter electrode is an ion-accepting and donating electrode. The potential difference V1 is chosen such that, when it is applied, the absorption and reflection of the electrochromic material of the first information layer 11 become relatively high at the wavelength 11. The required potential difference V1 depends on the wavelength 11, the electrochromic material, the electrolyte, the counter electrode, and an optional additional electrode in the information stack.

Then, once the absorption and reflection of the electrochromic material of the first information layer 11 are high, the potential difference can be cut. Actually, the electrochromic materials used exhibit bistability, which means that their optical properties persist when no potential difference is applied.

As the absorption and reflection of the first information layer 11 are high, this first information layer 11 absorbs energy from the optical beam focused on this information layer. When the optical beam is focused on a pit of the first information layer 11, the absorbed energy is converted into a fluorescence signal by the fluorescent material comprised in this pit. This fluorescence signal is then detected by means of conventional techniques. Information is thus read from the first information layer 11. Examples of such fluorescent materials are quinoline, acridine, indole, coumarin derivatives, such as 2,3,5,6-1H,4H-tetrahydro-9-acetylquinolizino-[9,9a,1-gh]-coumarin and 3-(2'-N-methylbenzimidazolyl)-7-N,N-diethylaminocoumarin, and pyrromethene derivatives. These fluorescent materials may be applied as such, or be dispersed in a supporting matrix material, such as one of a polymeric nature, with the optional aid of complexation or adsorption to a binder.

The electrolyte layer of an information stack comprises an electrolyte, which should be able to provide ions to the information layer and the counter electrode of this information stack. Preferably, solid or elastomeric polymeric electrolytes are used in an information carrier in accordance with the invention. These electrolytes consist of polymers comprising ion-labile groups, or consist of polymers with dissolved salts. Examples of polymers with dissolved salts are crosslinked polyethers, polyethylene oxide, polyvinyl alcohol or polymethyl methacrylate, with salts such as lithium chlorate, triflic acid or phosphoric acid.

Once the information of the first information layer 11 has been read, the second information layer is scanned. First, the first information layer 11 is made transparent in that a potential difference -V1 is applied between the first information layer 11 and the first counter electrode 13, which is a reverse potential difference compared with V1. As a consequence, the electrochromic material of the first information layer 11 becomes oxidized, in which state it has a low absorption at the wavelength 11. The potential difference -V1 can then be cut, because the electrochromic material of the first information layer 11 is bistable. Then, the second information layer 15 is made absorbent, in that a potential difference V2 is applied between the second information layer 15 and the second counter electrode 17. In this example, V2 is equal to V1, because the first and second information stacks comprise the same electrochromic material. If different electrochromic materials are used in the first and second information layers 11 and 15, V2 may differ from V1. Once the second information layer 15 has become absorbent, the potential difference V2 is cut, because the used electrochromic material is bistable.

Once the absorption of the second information layer 15 is high, this second information layer 15 can absorb energy from the optical beam focused on this second information layer 15. When the optical beam is focused on a pit of the second information layer 15, the absorbed energy is converted into a fluorescence signal by the fluorescent material comprised in this pit. This fluorescence signal is then detected, and information is thus read from the second information layer 15.

Due to the so-called Stokes-shift, the fluorescence signal has a wavelength 12. The fluorescent material is chosen so as to be transparent at the wavelength 12, so that the detected fluorescence signal is not perturbed by the fluorescent material of the first information layer 11.

The first information layer 11 does not interfere with the read-out of information recorded on the second information layer 15, because the electrochromic material of the first information layer 11 is made transparent at the wavelength 11, as was explained above. Hence, the optical beam at wavelength 11 traversing the first information layer 11 does not interact with the lands of the first information layer 11, neither does it interact with the pits of the first information layer 11, because the fluorescent material is chosen to be transparent at the wavelength 11. Moreover, the electrochromic material of the first information layer 11 is chosen to be transparent at the wavelength 12, so that it does not interact with the fluorescence signal at wavelength 12.

As a consequence, it is possible to address only one information layer, while the rest of the information carrier is transparent or has a low absorption at the wavelength 11 and at the wavelength 12. The desired layer is addressed by application of the suitable potential differences between the information layers and the counter electrodes of the respective information stacks.

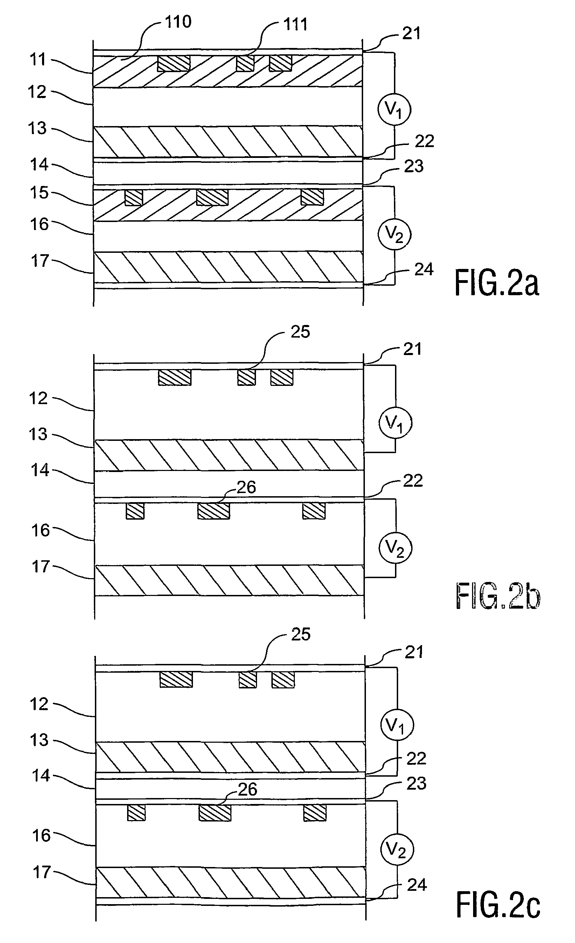

Fig. 2a shows a second ROM information carrier in accordance with the invention. In this Figure, numbers identical to numbers of Fig. 1a stand for the same entities. This information carrier comprises a first and a second information stack. The first information stack comprises a first electrode 21 and a second electrode 22. The second information stack comprises a third electrode 23 and a fourth electrode 24. The first, second, third and fourth electrodes 21 to 24 are chosen so as to be transparent at the wavelengths 11 and 12.

The first and second information layers 11 and 15 are patterned by conventional techniques as described above, and the pits are filled with the fluorescent material. The electrodes 21 to 24 are deposited during the manufacturing process, which uses conventional techniques, such as vapour deposition or coating.

In order to switch the electrochromic material of the first information layer 11 from a transparent state to an absorbent state at the wavelength 11, a suitable potential difference is applied between the first and second electrodes 21 and 22. This potential difference depends, inter alia, on the nature of the first and second electrodes 21 and 22. Examples of materials which may be used for the first and second electrodes 21 and 22 are ITO (Indium Tin Oxide), PPV (poly(phenylenevinylene)), PEDOT (poly(3,4-ethylenedioxythiophene) and other polythiophene derivatives. In order to switch the first information layer 11 from an absorbent state to a transparent state at the wavelength 11, a reverse potential difference is applied between the first and second electrodes 21 and 22. This description also applies to the second information stack.

Fig. 2b shows a third ROM information carrier in accordance with the invention. This information carrier comprises a first electrode 21, a first information layer 25, a first electrolyte layer 12, a first counter electrode 13, a spacer layer 14, a second electrode 22, a second information layer 26, a second electrolyte layer 16 and a second counter electrode 17. The first electrode 21, the first information layer 25, the first electrolyte layer 12 and the first counter electrode 13 form a first information stack, the second electrode 22, the second information layer 26, the second electrolyte layer 16 and the second counter electrode 17 form a second information stack. The two information stacks are separated by the spacer layer 14.

An example of a manufacturing process for making the information carrier of Fig. 2b will be described below. A stamper comprising a plurality of convexities is applied to a layer comprising an electrolyte, such as the second electrolyte layer 16. This results in a pattern on the surface of the second electrolyte layer 16, said pattern being similar to the convexities of the stamper. Then, a layer comprising the fluorescent material and the electrochromic material is deposited on the surface of the patterned electrolyte layer. This layer comprising the fluorescent material and the fluorescent material is chosen so as to have good adhesion properties to the patterned electrolyte layer. A portion of this layer penetrates into the pits of the patterned second electrolyte layer 16 and another portion remains on the surface of the lands of the patterned second electrolyte layer 16. This other portion is then eliminated by means of a suitable solvent. Thus, the second information layer 26 is obtained, which corresponds to the pits of the second electrolyte layer 16, filled with the fluorescent and the electrochromic material. These pits filled with the fluorescent material and the electrochromic material are fluorescent cells, which comprise the information recorded on the second information layer 26. Then, the second information layer 26 and the lands of the second electrolyte layer 16 are coated with the second electrode 22, the spacer layer 14, the first counter electrode 13 and the first electrolyte layer 12. A stamper comprising a plurality of convexities is then applied to the first electrolyte 12 layer and the operations described above are repeated in order to obtain the first information layer 25, which corresponds to the pits of the first electrolyte layer 12, filled with the fluorescent material and the electrochromic material. These operations may then be repeated in order to obtain an information carrier comprising a plurality of information stacks. Such an information carrier may also be manufactured by means of an injection molding technique, as described in WO 98/50914.

The fluorescent material and the electrochromic material may be mixed in a layer, which is then deposited in the pits of the first and second electrolyte layers 12 and 16. It is also possible to use one and the same material as the fluorescent and electrochromic material. Examples of fluorescent electrochromic materials are aminonaphtylethenylpyridinium-dyes, RH-dyes, carbocyanine derivatives and rhodamine derivatives.

In order to scan the first information layer 25, a potential difference V1 is applied between the first electrode 21 and the first counter electrode 13. Electrons are absorbed by the electrochromic material of the first information layer 25, which becomes reduced, so that the absorption and reflection of the first information layer 25 become high. When the optical beam at wavelength 11 is focused on a fluorescent cell, a fluorescence signal is thus generated.

Then, the first information layer 11 is made transparent at wavelength 11 by means of a potential difference -V1 applied between the first electrode 21 and the first counter electrode 13. The second information layer 26 is made absorbent in that a potential difference V1 is applied between the second electrode 22 and the second counter electrode 17.

Fig. 2c shows a fourth ROM information carrier in accordance with the invention. This information carrier comprises a first electrode 21, a first information layer 25, a first electrolyte layer 12, a first counter electrode 13, a second electrode 22, a spacer layer 14, a third electrode 23, a second information layer 26, a second electrolyte layer 16, a second counter electrode 17 and a fourth electrode 24. The first electrode 21, the first information layer 25, the first electrolyte layer 12, the first counter electrode 13 and the second electrode 22 form a first information stack, the third electrode 23, the second information layer 26, the second electrolyte layer 16, the second counter electrode 17 and the fourth electrode 24 form a second information stack. The two information stacks are separated by the spacer layer 14.

Such an information carrier is manufactured by means of a technique similar to the process used for manufacturing the third ROM information carrier in accordance with the invention, described with reference to Fig. 2b.

In this information carrier, the potential differences are applied between the first and second electrodes 21 and 22, and the third and fourth electrodes 23 and 24, respectively.

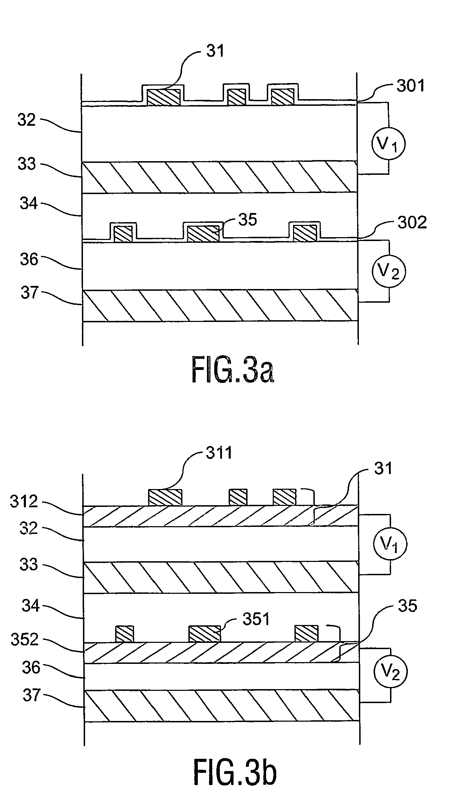

Fig. 3a shows a fifth ROM information carrier in accordance with the invention. This information carrier comprises a first electrode 301, a first information layer 31, a first electrolyte layer 32, a first counter electrode 33, a spacer layer 34, a second electrode 302, a second information layer 35, a second electrolyte layer 36 and a second counter electrode 37. The first electrode 301, the first information layer 31, the first electrolyte layer 32 and the first counter electrode 33 form a first information stack. The second electrode 302, the second information layer 35, the second electrolyte layer 36 and the second counter electrode 37 form a second information stack. The two information stacks are separated by the spacer layer 34. Such an information carrier is manufactured by means of conventional techniques, such as those described in patent WO 98/50914.

For example, a photoresist layer is deposited on the second electrolyte layer 36. This photoresist layer is appropriately exposed through a photomask, so as to destroy the photoresist layer, except where information is to be written. This results in a patterned structure comprising small pins of photoresist material deposited on the surface of the second electrolyte layer 36. The patterned structure is then dipped in a solution comprising the fluorescent material and the electrochromic material. The photoresist material is chosen so as to be capable of absorbing the fluorescent material and the electrochromic material, which may possibly be the same material. Then, once the fluorescent material and the electrochromic material have penetrated into the pins of photoresist material, the second information layer 35 is obtained, which comprises fluorescent cells. The second information layer 35 and the second electrolyte layer 36 are then coated with the second electrode 302, the spacer layer 34, the first counter electrode 33, the first electrolyte layer 32, and a photoresist material. The operations described above are repeated in order to obtain the first information layer 31. These operations may then be repeated in order to obtain an information carrier comprising a plurality of information stacks.

In order to scan the first information layer 31, a potential difference V1 is applied between the first electrode 301 and the first counter electrode 33. Electrons are absorbed by the electrochromic material of the first information layer 31, which becomes reduced, so that the absorption of the first information layer 31 becomes high. When the optical beam at wavelength 11 is focused on a fluorescent cell, a fluorescence signal is generated thereby.

Then, the first information layer 31 is made transparent at wavelength 11 in that a potential difference -V1 is applied between the first electrode 301 and the first counter electrode 33. The second information layer 35 is then made absorbent, by means of a potential difference V1 applied between the second electrode 302 and the second counter electrode 37.

Fig. 3b shows a sixth ROM information carrier in accordance with the invention. This information carrier comprises a first information layer 31, a first electrolyte layer 32, a first counter electrode 33, a spacer layer 34, a second information layer 35, a second electrolyte layer 36 and a second counter electrode 37. The first information layer 31, the first electrolyte layer 32 and the first counter electrode 33 form a first information stack. The second information layer 35, the second electrolyte layer 36 and the second counter electrode 37 form a second information stack. The two information stacks are separated by the spacer layer 34. The first information layer 31 comprises a first electrochromic layer 312 comprising the electrochromic material and a first fluorescent layer 311 comprising fluorescent cells comprising the fluorescent material. The second information layer 35 comprises a second electrochromic layer 352 comprising the electrochromic material and a second fluorescent layer 351 comprising fluorescent cells comprising the fluorescent material.

An example of a manufacturing process for making the information carrier of Fig. 3b will be described below. A photoresist layer is deposited on the second electrochromic layer 352. This photoresist layer is appropriately exposed through a photomask, so as to destroy the photoresist layer, except where information is to be written. This results in a patterned structure comprising small pins of photoresist material deposited on the surface of the second electrochromic layer 352. The patterned structure is then dipped in a solution comprising the fluorescent material. The photoresist material is chosen so as to be capable of absorbing the fluorescent material. Then, once the fluorescent material has penetrated into the pins of photoresist material, the second fluorescent layer 351 is obtained. The second fluorescent layer 351 and the second electrochromic layer 352 are then coated with the spacer layer 34, the first counter electrode 33, the first electrolyte layer 32, the first electrochromic layer 312 and a photoresist material. The operations described above are repeated in order to obtain the first fluorescent layer layer 311. These operations may then be repeated in order to obtain an information carrier comprising a plurality of information stacks.

In this information carrier, the potential differences are applied between the first electrochromic layer 312 and the first counter electrode 33, and the second electrochromic layer 352 and the second counter electrode 37, respectively.

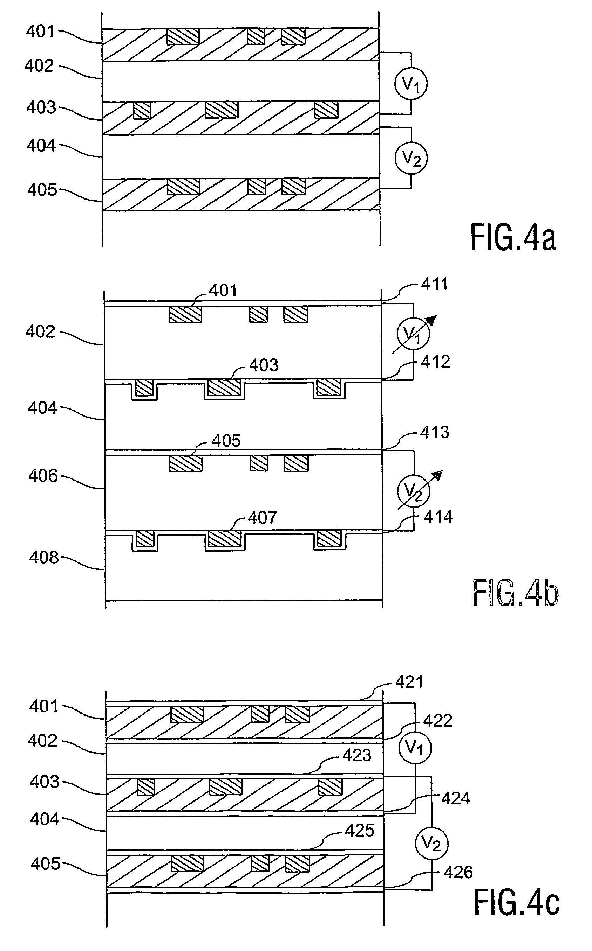

Fig. 4a shows a first ROM information carrier in accordance with an advantageous embodiment of the invention. This information carrier comprises a first, a second and a third information layer 401, 403 and 405, and a first and a second electrolyte layer 402 and 404. The first information layer 401, the first electrolyte layer 402 and the second information layer 403 form a first information stack. The second information layer 403, the second electrolyte layer 404 and the third information layer 405 form a second information stack. The first and second information stacks thus have two information layers and two counter electrodes.

The first, second and third information layer 401, 403 and 405 comprise lands comprising the electrochromic material and pits filled with the fluorescent material. The manufacturing process of this information carrier is similar to the manufacturing process described in the description of Fig. 1.

In the first information stack, the second information layer 403 serves as counter electrode for the first information layer 401, and the first information layer 401 serves as counter electrode for the second information layer 403. Actually, the first and second information layers 401 and 403 comprise electrochromic materials, and are thus ion-accepting and donating electrodes. In the second information stack, the third information layer 405 serves as counter electrode for the second information layer 403, and the second information layer 403 serves as counter electrode for the third information layer 405.

In order to address the first information layer 401, the first information layer 401 is made absorbent at the wavelength 11 in that a suitable potential difference V1 is applied between the first information layer 401 and the second information layer 403. Then, in order to address the second information layer 403, the first information layer 401 is made transparent at the wavelengths 11 by means of a reverse potential difference -V1 applied between the first information layer 401 and the second information layer 403. As a consequence, the electrochromic material of the second information layer 403 becomes reduced, and hence becomes absorbent at the wavelength 11. Hence, the second information layer 403 is addressed and can be scanned.

In order to address the third information layer 405, a potential difference V2 is applied between the second information layer 403 and the third information layer 405. This potential difference V2 is equal to -V1, as the electrochromic materials in the information layers 401, 403 and 405 are the same. The electrochromic material of the third information layer 405 is reduced and becomes absorbent at the wavelength 11, and the electrochromic material of the second information layer 403 is oxidized and becomes transparent at the wavelength 11. As a consequence, only the third information layer 405 is absorbent at the wavelength 11, so that the first and second information layers 401 and 403 do not perturb the scanning of the third information layer 405.

Fig. 4b shows a second ROM information carrier in accordance with an advantageous embodiment of the invention. This information carrier comprises a first, a second, a third and a fourth information layer 401, 403, 405 and 407, a first and a second spacer layer 404 and 408, a first and a second electrolyte layer 402 and 406, and a first, a second, a third and a fourth electrode 411 to 414. The first electrode 411, the first information layer 401, the first electrolyte layer 402, the second information layer 403 and the second electrode 412 form a first information stack. The third electrode 413, the third information layer 405, the second electrolyte layer 406, the fourth information layer 407 and the fourth electrode 414 form a second information stack. The two information stacks are separated by the spacer layer 404.

An example of manufacturing process for making the information carrier of Fig. 4b is described hereinafter. A stamper is applied to the second spacer layer 408. This results in a pattern on the surface of the second spacer layer 408. Then, the fourth electrode 414 is deposited on the patterned second spacer layer 408. Then, a layer comprising the fluorescent material and the electrochromic material is deposited on the surface of the patterned fourth electrode 414. A portion of this layer penetrates into the pits of the patterned fourth electrode 414 and an other portion remains on the surface of the lands of the patterned fourth electrode 414, which other portion is then eliminated by means of a suitable solvent. The fourth information layer 407 is thus obtained, which corresponds to the pits of the fourth electrode 414, filled with the fluorescent and the electrochromic material. Then, the fourth information layer 407 and the lands of the fourth electrode 414 are coated with the second electrolyte layer 406. This second electrolyte layer is then patterned by means of a stamper, and the pits of the patterned second electrolyte layer 406 are filled with the electrochromic material and the fluorescent material, so as to obtain the third information layer 405. This third information layer 405 and the second electrolyte layer 406 are then coated with the third electrode 413 and the first spacer layer 414. These operations may then repeated in order to obtain the first and second information layers 401 and 403. These operations can then be repeated in order to obtain an information carrier comprising a plurality of information stacks.

In order to address the first information layer 401, the first information layer 401 is made absorbent by the application of a suitable potential difference V1 between the first electrode 411 and the second electrode 412. Then, in order to address the second information layer 403, the first information layer 401 is made transparent by means of a reverse potential difference -V1 applied between the first electrode 411 and the second electrode 412. As a consequence, the second information layer 403 becomes absorbent at the wavelength 11. Hence, the second information layer 403 is addressed and can be scanned.

Then, in order to address the third information layer 405, the second information layer 403 has to be made transparent, so that the scanning of the third information layer 405 is not perturbed by the second information layer 403. This cannot be done by applying a potential difference V1 between the first electrode 411 and the second electrode 412, because the first information layer 401 would become absorbent at the wavelength 11, hence perturbing the scanning of the third information layer 405. As a consequence, a potential difference different from V1 is applied between the first electrode 411 and the second electrode 412, at which potential difference the first information layer 401 and the second information layer 403 are transparent. This is possible, because the absorption of certain electrochromic materials depends on the applied potential difference, as explained, for example, in "Electrochromism: Fundamentals and Applications", page 145. For example, a potential difference V1/2 may be applied. The potential difference to be applied in order to make the first and second information layers 401 and 403 transparent depends, inter alia, on the electrochromic material used.

The third information layer 405 is then addressed by means of a potential difference V2 applied between the third electrode 413 and the fourth electrode 414. In this example, V2 is equal to V1, because the electrochromic materials used in the information layers are the same. Then, in order to address the fourth information layer 407, a reverse potential difference -V2 is applied between the third electrode 413 and the fourth electrode 414.

Fig. 4c shows a third ROM information carrier in accordance with an advantageous embodiment of the invention.

This information carrier comprises a first, a second and a third information layer 401, 403 and 405, a first and a second electrolyte layer 402 and 404, and a first, a second, a third, a fourth, a fifth and a sixth electrode 421 to 426. The first electrode 421, the first information layer 401, the first electrolyte layer 402, the second information layer 403 and the fourth electrode 424 form a first information stack. The third electrode 423, the second information layer 403, the second electrolyte layer 404, the third information layer 405 and the sixth electrode 426 form a second information stack. In this information carrier, the six electrodes 421 to 426 are porous, which means that ions from the electrolyte layers 402 and 404 can traverse these electrodes 421 to 426. The manufacturing process of this information carrier is similar to the manufacturing process described in the description of Fig. 1.

In order to address the first information layer 401, the first information layer 401 is made absorbent in that a suitable potential difference V1 is applied between the first electrode 421 and the fourth electrode 424. As the second and third electrodes 422 and 423 are porous, ions can flow between the first and second information layers 401 and 403, so that the electrochemical process can be performed.

Then, in order to address the second information layer 403, the first information layer is made transparent by means of a reverse potential difference -V1 applied between the first electrode 421 and the fourth electrode 424. As a consequence, the electrochromic material of the second information layer 403 becomes reduced, and thus becomes absorbent at the wavelength 11. The second information layer 403 is addressed and can be scanned in this manner.

In order to address the third information layer 405, a potential difference V2 is applied between the third electrode 423 and the sixth electrode 426. This potential difference V2 is equal to -V1, as the electrochromic materials in the information layers 401, 403 and 405 are the same. The electrochromic material of the third information layer 405 is reduced and becomes absorbent at the wavelength 11, and the electrochromic material of the second information layer 403 is oxidized and becomes transparent at the wavelength 11. As a consequence, only the third information layer 405 is absorbent at the wavelength 11, so that the first and second information layers 401 and 403 do not perturb the scanning of the third information layer 405.

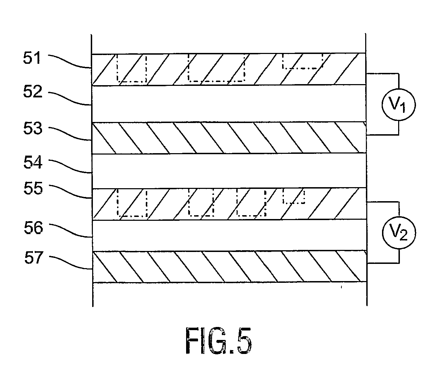

Fig. 5 shows a WORM (Write Once Read Many) information carrier in accordance with the invention. This information carrier comprises a first information layer 51, a first electrolyte layer 52, a first counter electrode 53, a spacer layer 54 a second information layer 55, a second electrolyte layer 56 and a second counter electrode 57. The first information layer 51, the first electrolyte layer 52 and the first counter electrode 53 form a first information stack, the second information layer 55, the second electrolyte layer 56 and the second counter electrode 57 form a second information stack. The two information stacks are separated by the spacer layer 54.

The first and second information layers 51 and 55 comprise an electrochromic material and a fluorescent material, which may possibly be the same material.

In a first embodiment, the first and second information layers 51 and 55 comprise an electrochromic material having an ability to take up or release electrons which ability can be locally reduced by means of the optical beam at the wavelength 11. In order to locally reduce the ability to take up or release electrons of the electrochromic materials, a relatively high power of the optical beam is required. The high power is absorbed in the material and changes its material properties, for example by melting, annealing, photochemical reactions, thermal damaging or deterioration.

This relatively high power is used during writing of information on the information carrier, whereas a smaller lower is used during reading, the latter being incapable of reducing the ability to take up or release electrons of the electrochromic materials.

In order to write information on the first information layer 51, the optical beam having the relatively high power is focused on the first information layer 51, in order to locally reduce the ability to take up or release electrons of the electrochromic material, for writing marks. In Fig. 5, the marks where the ability to take up or release electrons of the electrochromic material is reduced are represented by dotted lines. The depth of the marks in the information layers can be chosen by varying the power of the optical beam, or by varying the time during which the optical beam is focused on a mark. Having different marks depths of allows multilevel recording.

In order to write information on the second information layer 55, the optical beam having the relatively high power is focused on the second information layer 55, in order to locally reduce the ability to take up or release electrons of the electrochromic material, for writing marks.

The information layer on which information is to be written may be made absorbent before the relatively high power optical beam is focused on it. This improves the absorption of the relatively high-power optical beam, which increases the reduction of the ability to take up or release electrons of the electrochromic material.

In order to read information from the first information layer 51, this first information layer 51 is made absorbent at the wavelength 11, in that a suitable voltage V1 is applied between the first information layer 51 and the first counter electrode 53. The first information layer 51 becomes absorbent, except where marks have been written, because the ability to take up or release electrons of these marks is too small for allowing a reduction of the electrochromic material of these marks. Hence, when the optical beam is focused on a mark, no fluorescence signal is generated, whereas a fluorescence signal is generated when the optical beam is focused on a non-marked area. This property is used for reading information from the first information layer 51.

In order to read information from the second information layer 55, the first information layer 51 is made transparent at the wavelength 11, by means of a reverse voltage -V1 applied between the first information layer 51 and the first counter electrode 53. The entire first information layer 51, including the marks, is made transparent at the wavelength 11 thereby. The first information layer 51 will thus not perturb the scanning of the second information layer 55. Then, the second information layer 55 is made absorbent at the wavelength 11, by means of a suitable voltage V2, equal to V1, applied between the second information layer 55 and the second counter electrode 57. The second information layer 55 becomes absorbent, except where marks have been written. Information can then be read from the second information layer 55.

In a second embodiment, the first and second information layers 51 and 55 comprise a fluorescent material having an ability to emit light by fluorescence, which ability can be locally reduced by means of the optical beam at the wavelength 11. In order to locally reduce the ability to emit light by fluorescence, a relatively high power of the optical beam is required. This relatively high power is used during writing of information on the information carrier, whereas a lower power is used during reading, which power is incapable of reducing the ability to emit light by fluorescence of the fluorescent materials.

In order to write information on the first information layer 51, the optical beam having the relatively high power is focused on the first information layer 51, in order to locally reduce the ability to emit light by fluorescence of the fluorescent material, for writing marks. The same process applies for writing information on the second information layer 55.

The information layer on which information is to be written may be made absorbent before the relatively high-power optical beam is focused on it. This improves the absorption of the relatively high-power optical beam, which increases the reduction of the ability to emit light by fluorescence of the fluorescent material.

In order to read information from the first information layer 51, this first information layer 51 is made absorbent at the wavelength 11, in that a suitable voltage V1 is applied between the first information layer 51 and the first counter electrode 53. The first information layer 51 becomes absorbent, but a fluorescence signal is generated only when the optical beam is focused on a non-marked area. This property is used for reading information from the first information layer 51.

It is important to note that the first and second information layers 51 and 55 may comprise an electrochromic material having an ability to take up or release electrons which can be locally reduced by means of the optical beam at the wavelength 11, and a fluorescent material having an ability to emit light by fluorescence, which can be locally reduced by means of the optical beam at the wavelength 11. During writing, the relatively high-power optical beam is used for locally reducing the ability to take up or release electrons of the electrochromic material and the ability to emit light by fluorescence of the fluorescent material.

It is also important to note that information layers with an electrochromic material having an ability to take up or release electrons which can be locally reduced by means of the optical beam at the wavelength 11 and/or a fluorescent material having an ability to emit light by fluorescence, which can be locally reduced by means of the optical beam at the wavelength 11, may be used in cooperation with additional electrodes, such as those described with reference to Fig. 2a to 2c. It should also be noted that these information layers may also be used in information carriers such as those described with reference to Fig. 4a to 4c, where an information layer serves as counter electrode for another information layer.

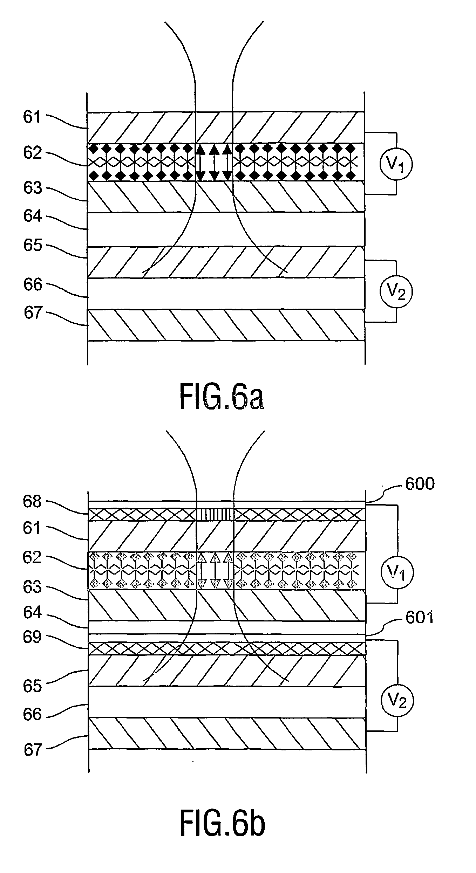

Fig. 6a shows a first RW (ReWritable) information carrier in accordance with the invention. This information carrier comprises a first information layer 61, a first electrolyte layer 62, a first counter electrode 63, a spacer layer 64 a second information layer 65, a second electrolyte layer 66 and a second counter electrode 67. The first information layer 61, the first electrolyte layer 62 and the first counter electrode 63 form a first information stack, the second information layer 65, the second electrolyte layer 66 and the second counter electrode 67 form a second information stack. The two information stacks are separated by the spacer layer 64.

The first and second information layers 61 and 65 comprise a fluorescent material and an electrochromic material, which may possibly be the same material.

The first and second electrolyte layers 62 and 66 have a temperature-dependent mobility threshold. This means that, below this threshold, the mobility of ions within these electrolyte layers is low, whereas ion mobility is high above this threshold. Examples of such electrolyte layers are a polymeric matrix having a suitable glass transition, non-covalently bonded aggregates that show a suitable temperature dependent equilibrium between an aggregated and a free form, and a polymeric matrix having a relatively strong temperature-dependent viscosity.

In order to write a mark on the first information layer 61, the optical beam is focused on this mark. The electrolyte layer under this mark is heated, and the temperature of the electrolyte layer under this mark exceeds the mobility threshold. A suitable potential difference V1 is applied between the first information layer 61 and the first counter electrode 63. As the ion mobility is low where the optical beam is not focused, the electrochromic process takes place only where the ion mobility is high, i.e. where a mark is to be written. As a consequence, the first information layer 61 becomes absorbent at the wavelength 11 only where the optical beam is focused, and a mark is written where this optical beam is focused. Then, the optical beam is focused on the location where another mark is to be written on the first information layer 61. When the potential difference V1 is cut, the written marks remain absorbent at the wavelength 11, because the electrochromic material is bistable. The same process is repeated for writing marks on the second information layer 65.

The electrolyte layers are chosen so as to have a decomposition temperature below the temperature-dependent mobility threshold. In that case, the information layers are not degraded during writing, which means that the writing process is reversible.

In order to read information from the first information layer 61, the optical beam is focused on this information layer. A fluorescence signal is generated only where the first information layer 61 is absorbent at the wavelength 11, i.e. where a mark has been written. This property is used for reading information from the first information layer 61. No potential difference is needed between the first information layer 61 and the first counter electrode 63, as the marks remain absorbent without any potential difference being applied. The same process is repeated in order to read information from the second information layer 65.

The information written on the information layers of this information carrier can be erased, and information can be rewritten on these information layers. In order to erase information written on the first information carrier 61, this first information carrier 61 is scanned by a relatively high-power optical beam. The first electrolyte layer 62 is heated, and the temperature of the first electrolyte layer 62 exceeds the mobility threshold. A potential difference -V1 is applied between the first information layer 61 and the first counter electrode 63. As a consequence, the electrochromic material of the written marks becomes oxidized and hence transparent. The whole first information layer 61 thus becomes transparent, and marks can then be rewritten on this first information layer 61, as described above. The same process is repeated in order to erase information written on the second information layer 65.

It is important to note that it is possible to design a WORM information carrier with the information carrier of Fig. 6a, for example, by use of an electrochromic material which exhibits an irreversible transition, i.e. which cannot be reduced once it has been oxidized, or vice-versa. Examples of electrochromic materials which exhibit an irreversible transition are methylene red, methylene orange and erioglaucine. It is also possible to prevent the user from applying a reverse potential difference, so that the written data cannot be erased. Such a limitation may be included, for example, in the so-called lead-in of the information carrier.

In the example described above, the first information layer 61 interferes with the read-out of the second information layer 65, because it comprises absorbent marks, which interacts with the optical beam. Actually, in order to enable a read-out of information written on the information layers, the absorption of the marks has to be relatively high, so that the marks are capable of absorbing energy from the optical beam at the wavelength 11, which energy is then converted into a fluorescence signal. For example, an absorption of 20 per cent is required for the written marks. For a filling ratio of 0.25, this leads to an absorption of an information layer of about 5 per cent. The filling ratio represents the ratio between the marks and the non-marked area. If the information carrier comprises a high number of information layers, the read-out of the deepest information layers is hampered by the presence of the information layers located above the deepest layers. As a consequence, the number of layers is limited to about 20 in this case.

In order to increase the number of layers of such a RW information carrier, the information layers further comprise a thermochromic material having temperature-dependent optical properties at the wavelength 11 of the optical beam.

In this case, information is written as described hereinbefore, but the electrochromic material and the potential differences are chosen such that the absorption of the written marks is relatively low, for example 2 per cent. Such an absorption is not capable of causing the emission of a fluorescence signal, but the presence of the thermochromic material helps the generation of the fluorescence signal, as will be explained below.

In order to read information from the first information layer 61, the optical beam is focused on this information layer 61. As the written marks have a non-zero absorption, the optical beam is absorbed, and the written marks of the first information layer 61 are heated. The temperature of the written marks reaches a threshold above which the absorption of the thermochromic material at the wavelength 11 becomes relatively high. Hence, the absorption of the written marks becomes sufficiently high to generate a fluorescence signal. The same process is repeated in order to read information from the second information layer 65. During read-out of information from the second information layer 65, the optical beam is focused on the second information layer 65. Hence, the written marks of the first information layer 61 are not heated, and the absorption of these written marks remains relatively low. As a consequence, read-out of the second information layer 65 is much less perturbed by the first information layer 61, when the information layers comprise a thermochromic material. As a consequence, the number of information layers can be increased by the use of a thermochromic material.

The thermochromic material may be mixed with the electrochromic material and the fluorescent material in the information layers. It is also possible to add a layer to each information stack, which layer comprises a thermochromic material and is adjacent to the layer comprising the electrochromic material and the fluorescent material. In this case, the information layer is the combination of the layer comprising the electrochromic material and the fluorescent material and the layer comprising the thermochromic material.

Fig. 6b shows a second RW information carrier in accordance with the invention. In this Figure, numbers identical to numbers of Fig.6a stand for the same entities. This information carrier further comprises a first photoconductive layer 68, a first working electrode 600, a second photoconductive layer 69 and a second working electrode 601.The first working electrode 53 and the first photoconductive layer belong to the first information stack, the second working electrode 54 and the second photoconductive layer 52 belong to the second information stack. The first and second working electrodes 600 and 601 are chosen to be transparent at the wavelength 1.

A photoconductive layer allows a transfer of electrons between the working electrode and the information layer of its information stack, when illuminated at the wavelength 11 of the optical beam.

In the information carrier of Fig. 6a, writing of a mark requires focusing of the optical beam on this mark during a relatively long time. Actually, the electrochromic process requires a certain time, for example a few milliseconds. During this relatively long time, the heat created by the optical beam can diffuse in the electrolyte layer, thus leading to a larger mark than desired, because the ions mobility of the electrolyte layer is increased over a larger area than desired. As a consequence, only relatively large marks can be written, which leads to a relatively low data capacity per information layer.

In order to solve this problem, each information stack comprises a photoconductive layer, which allows a transfer of electrons between the working electrode and the information layer of its information stack, only when it is illuminated at the wavelength 11.

In order to write a mark on the first information layer 61, the optical beam is focused on this mark. As a consequence, only the part located above this mark is illuminated at the wavelength 11. Hence, the electrochromic process can only take place in this mark, because the absorption of electrons is enabled only in this mark. The electrolyte layer under this mark is heated, and the temperature of the electrolyte layer under this mark exceeds the mobility threshold. A suitable potential difference V1 is applied between the first working electrode 600 and the first counter electrode 63. As a consequence, the first information layer 61 becomes absorbent only where the optical beam is focused, and a mark is written where this optical beam is focused. The same process is repeated in order to write marks on the second information layer 65.

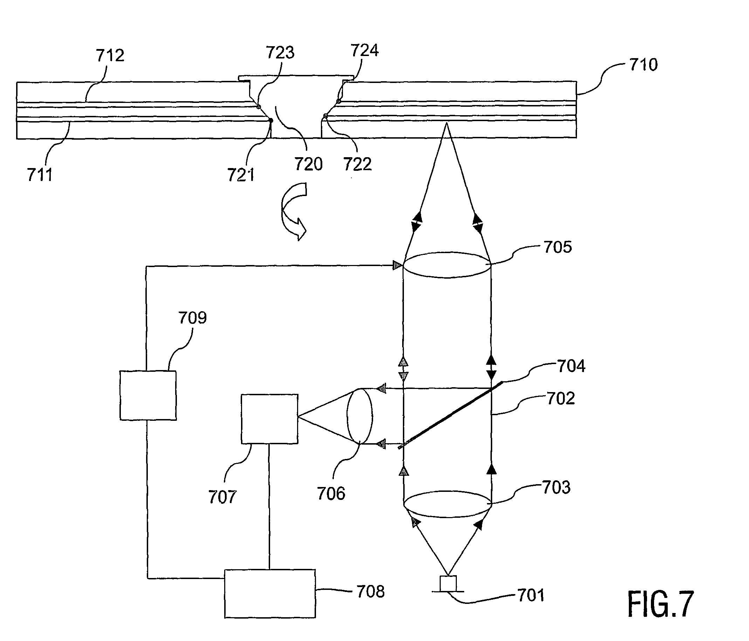

Fig. 7 shows an optical device in accordance with the invention. Such an optical device comprises a radiation source 701 for producing an optical beam 702, a collimator lens 703, a beam splitter 704, an objective lens 705, a servo lens 706, detecting means 707, measuring means 708 and a controller 709. This optical device is intended for scanning an information carrier 710. The information carrier 710 comprises two information stacks 711 and 712, each comprising at least an information layer.

During a scanning operation, which may be a writing operation or a reading operation, the information carrier 710 is scanned by the optical beam 702 produced by the radiation source 701. The collimator lens 703 and the objective lens 705 focus the optical beam 702 on an information layer of the information carrier 710. The collimator lens 703 and the objective lens 705 are focusing means. During a scanning operation, a focus error signal may be detected, corresponding to a positioning error of the optical beam 702 on the information layer. This focus error signal can be used for correcting the axial position of the objective lens 705, so as to compensate for a focus error of the optical beam 702. A signal is sent to the controller 709, which drives an actuator in order to move the objective lens 705 axially.

The error signals, as well as other error signals, and the data written on the information layer are detected by the detecting means 707. Light is emitted by fluorescence when the optical beam 702 is focused on an information layer of the information carrier 710 during read-out of information. A portion of the light emitted by fluorescence reaches the objective lens 705, and is transformed into a parallel beam, which reaches the servo lens 706, via the beam splitter 704. This parallel beam then reaches the detecting means 707. The detecting means 707 may comprise means for separating the fluorescence signal coming from the addressed layer from the fluorescence signals coming from the non-addressed layers. For example, a confocal pinhole is arranged in front of a photodiode in order to spatially block the fluorescence signal coming from the non-addressed layers. However, such means for separating the fluorescence signal coming from the addressed layer from the fluorescence signals coming from the non-addressed layers are usually not necessary in an optical scanning device in accordance with the invention, because is it only the addressed layer that emits light by fluorescence in the information carriers in accordance with the invention.

The radiation source 701, the collimator lens 703, the beam splitter 704, the objective lens 705, the servo lens 706, the detecting means 707, the measuring means 708 and the controller 709 form an optical pick-up unit. This optical pick-up unit can rotate and translate so that the entire information carrier 610 can be scanned.

The optical device further comprises a clamper 720 for receiving the information carrier 710. The clamper 720 comprises contacts 721 to 724. These contacts 721 to 724 are designed so that, when the information carrier 710 is placed in the optical device, they render it possible to apply potential differences between the information layer and the counter electrode of an information stack. In this example, when the information carrier 710 is placed in the optical device, the first contact 721 is in electrical contact with the information layer of the first information stack 711, the second contact 722 is in electrical contact with the counter electrode of the first information stack 711, the third contact 723 is in electrical contact with the information layer of the second information stack 712 and the fourth contact 724 is in electrical contact with the counter electrode of the second information stack 712. Then, potential differences are applied between the contacts. For example, in order to make the information layer of the first information stack 711 absorbent at the wavelength 11, a suitable potential difference is applied between the first and second contacts 721 and 722.

Any reference sign in the following claims should not be construed as limiting the claim.

## Claims

1. An information carrier (710) for scanning information by means of an optical beam (702) having a wavelength, said information carrier comprising at least two information stacks (711, 712), wherein each stack comprises a counter electrode (13, 17), an electrolyte layer (12, 16) and an information layer (11, 15), the information carrier being **characterized in that** the information layer comprises a fluorescent material and an electrochromic material whose optical properties at the wavelength of the optical beam depend on a potential difference applied between the information layer and the counter electrode.

2. An information carrier as claimed in claim 1, wherein an information layer (403) serves as counter electrode for another information layer (401).

3. An information carrier as claimed in claim 1, said information carrier comprising pits and lands, wherein the pits are filled by the fluorescent material.

4. An information carrier as claimed in claim 1, wherein one and the same material is used as the fluorescent and the electrochromic material.

5. An information carrier as claimed in claim 1, wherein the electrochromic material has an ability to take up or release electrons, which ability can be locally reduced by means of the optical beam in order to write information on the information layer.

6. An information carrier as claimed in claim 1 or 5, wherein the fluorescent material has an ability to emit light by fluorescence, which ability can be locally reduced by means of the optical beam in order to write information on the information layer.

7. An information carrier as claimed in claim 1, wherein the electrolyte layer (52, 56) has a temperature-dependent mobility threshold.

8. An information carrier as claimed in claim 7, wherein the information layer further comprises a thermochromic material having temperature-dependent optical properties at the wavelength of the optical beam.

9. An information carrier as claimed in claim 7 or 8, wherein an information stack further comprises a photoconductive layer (68, 69) for allowing a transfer of electrons in the information layer when illuminated at the wavelength of the optical beam

10. A method of reading information from an information carrier by means of an optical beam having a wavelength, said information carrier comprising at least two information stacks, wherein each stack comprises a counter electrode, an electrolyte layer and an information layer, said method being **characterized in that** the information layer comprises a fluorescent material and an electrochromic material whose optical properties at the wavelength of the optical beam depend on a potential difference applied between the information layer and the counter electrode, the method comprising the steps of applying a potential difference between the information layer and the counter electrode of the information stack from which information is to be read and focusing the optical beam on the information layer of said stack.

11. A method of recording information on an information carrier by means of an optical beam having a wavelength, said information carrier comprising at least two information stacks, wherein each stack comprises a counter electrode, an electrolyte layer and an information layer, said method being **characterized in that** the information layer comprises a fluorescent material and an electrochromic material whose optical properties at the wavelength of the optical beam depend on a potential difference applied between the information layer and the counter electrode, the method comprising the step of focusing the optical beam on the information layer of the information stack on which information is to be recorded in order to locally reduce the ability to take up or release electrons of the electrochromic material and/or the ability of the fluorescent material to emit light by fluorescence.

12. A method of recording information on an information carrier by means of an optical beam having a wavelength, said information carrier comprising at least two information stacks, wherein each stack comprises a counter electrode, an electrolyte layer having a temperature-dependent mobility threshold and an information layer, said method being **characterized in that** the information layer comprises a fluorescent material and an electrochromic material whose optical properties at the wavelength of the optical beam depend on a potential difference applied between the information layer and the counter electrode, the method comprising the steps of focusing the optical beam on the information layer of the information stack on which information is to be recorded in order to locally heat the electrolyte layer of said stack above said mobility threshold, and applying a potential difference between the information layer and the counter electrode of said stack.

13. A method of erasing information from an information layer on which information has been recorded according to the method claimed in Claim 12, said method of erasing being **characterized in that** it comprises the steps of heating the electrolyte layer of said stack above said mobility threshold by means of the optical beam, and applying an inverse potential difference between the information layer and the counter electrode of said stack.

## Patentansprüche

1. Informationsträger (710) zum Abtasten von Informationen mittels eines eine Wellenlänge aufweisenden optischen Strahls (702), wobei der Informationsträger mindestens zwei Informationsstapel (711, 712) umfasst, wobei jeder Stapel eine Gegenelektrode (13, 17), eine Elektrolytschicht (12, 16) und eine Informationsschicht (11, 15) umfasst, wobei der Informationsträger **dadurch gekennzeichnet ist, dass** die Informationsschicht ein fluoreszierendes Material und ein elektrochromes Material umfasst, deren optische Eigenschaften bei der Wellenlänge des optischen Strahls von einer zwischen der Informationsschicht und der Gegenelektrode angelegten Potentialdifferenz abhängen.

2. Informationsträger nach Anspruch 1, wobei eine Informationsschicht (403) als Gegenelektrode für eine weitere Informationsschicht (401) dient.

3. Informationsträger nach Anspruch 1, der Pits und Lands umfasst, wobei die Pits mit dem fluoreszierenden Material gefüllt sind.

4. Informationsträger nach Anspruch 1, wobei ein und dasselbe Material als das fluoreszierende und das elektrochrome Material benutzt wird.

5. Informationsträger nach Anspruch 1, wobei das elektrochrome Material eine Fähigkeit aufweist, Elektronen aufzunehmen oder abzugeben, die sich mittels des optischen Strahls lokal reduzieren lässt, um Informationen auf die Informationsschicht zu schreiben.

6. Informationsträger nach Anspruch 1 oder 5, wobei das fluoreszierende Material eine Fähigkeit aufweist, durch Fluoreszenz Licht zu emittieren, die sich mittels des optischen Strahls lokal reduzieren lässt, um Informationen auf die Informationsschicht zu schreiben.

7. Informationsträger nach Anspruch 1, wobei die Elektrolytschicht (52, 56) eine temperaturabhängige Beweglichkeitsschwelle aufweist.

8. Informationsträger nach Anspruch 7, wobei die Informationsschicht ferner ein thermochromes Material umfasst, welches bei der Wellenlänge des optischen Strahls temperaturabhängige optische Eigenschaften aufweist.

9. Informationsträger nach Anspruch 7 oder 8, wobei ein Informationsstapel ferner eine lichtelektrische Leitschicht (68, 69) umfasst, um bei Beleuchtung mit der Wellenlänge des optischen Strahls einen Transfer von Elektronen in der Informationsschicht zu ermöglichen.

10. Verfahren zum Lesen von Informationen von einem Informationsträger mittels eines eine Wellenlänge aufweisenden optischen Strahls, wobei der Informationsträger mindestens zwei Informationsstapel umfasst, wobei jeder Stapel eine Gegenelektrode, eine Elektrolytschicht und eine Informationsschicht umfasst, wobei das Verfahren **dadurch gekennzeichnet ist, dass** die Informationsschicht ein fluoreszierendes Material und ein elektrochromes Material umfasst, deren optische Eigenschaften bei der Wellenlänge des optischen Strahls von einer zwischen der Informationsschicht und der Gegenelektrode angelegten Potentialdifferenz abhängen, wobei das Verfahren die Schritte des Anlegens einer Potentialdifferenz zwischen der Informationsschicht und der Gegenelektrode des Informationsstapels, aus dem Informationen gelesen werden sollen, sowie des Fokussierens des optischen Strahls auf die Informationsschicht des Stapels umfasst.

11. Verfahren zum Aufzeichnen von Informationen auf einem Informationsträger mittels eines eine Wellenlänge aufweisenden optischen Strahls, wobei der Informationsträger mindestens zwei Informationsstapel umfasst, wobei jeder Stapel eine Gegenelektrode, eine Elektrolytschicht und eine Informationsschicht umfasst, wobei das Verfahren **dadurch gekennzeichnet ist, dass** die Informationsschicht ein fluoreszierendes Material und ein elektrochromes Material umfasst, deren optische Eigenschaften bei der Wellenlänge des optischen Strahls von einer zwischen der Informationsschicht und der Gegenelektrode angelegten Potentialdifferenz abhängen, wobei das Verfahren den Schritt des Fokussierens des optischen Strahls auf die Informationsschicht des Informationsstapels, auf welchem Informationen aufgezeichnet werden sollen, umfasst, um die Fähigkeit des elektrochromen Materials, Elektronen aufzunehmen oder abzugeben, und/oder die Fähigkeit des fluoreszierenden Materials, durch Fluoreszenz Licht zu emittieren, lokal zu reduzieren.

12. Verfahren zum Aufzeichnen von Informationen auf einem Informationsträger mittels eines eine Wellenlänge aufweisenden optischen Strahls, wobei der Informationsträger mindestens zwei Informationsstapel umfasst, wobei jeder Stapel eine Gegenelektrode, eine Elektrolytschicht mit einer temperaturabhängigen Beweglichkeitsschwelle und eine Informationsschicht umfasst, wobei das Verfahren **dadurch gekennzeichnet ist, dass** die Informationsschicht ein fluoreszierendes Material und ein elektrochromes Material umfasst, deren optische Eigenschaften bei der Wellenlänge des optischen Strahls von einer zwischen der Informationsschicht und der Gegenelektrode angelegten Potentialdifferenz abhängen, wobei das Verfahren folgende Schritte umfasst: Fokussieren des optischen Strahls auf die Informationsschicht des Informationsstapels, auf welchem Informationen aufgezeichnet werden sollen, um die Elektrolytschicht des Stapels lokal über die Beweglichkeitsschwelle hinaus zu erwärmen, und Anlegen einer Potentialdifferenz zwischen der Informationsschicht und der Gegenelektrode des Stapels.

13. Verfahren zum Löschen von Informationen von einer Informationsschicht, auf welcher gemäß dem Verfahren nach Anspruch 12 Informationen aufgezeichnet wurden, wobei das Löschverfahren **dadurch gekennzeichnet ist, dass** es folgende Schritte umfasst: Erwärmen der Elektrolytschicht des Stapels mittels eines optischen Strahls über die Beweglichkeitsschwelle hinaus, und Anlegen einer inversen Potentialdifferenz zwischen der Informationsschicht und der Gegenelektrode des Stapels.

## Revendications

1. Support d'informations (710) pour balayer des informations au moyen d'un faisceau optique (702) qui a une longueur d'onde, ledit support d'informations comprenant au moins deux empilements d'informations (711, 712), dans lequel chaque empilement comprend une contre-électrode (13, 17), une couche d'électrolyte (12, 16) et une couche d'informations (11, 15), le support d'informations étant **caractérisé en ce que** la couche d'informations comprend un matériau fluorescent et un matériau électrochromique dont les propriétés optiques à la longueur d'onde du faisceau optique sont fonction d'une différence de potentiel appliquée entre la couche d'informations et la contre-électrode.

2. Support d'informations selon la revendication 1, dans lequel une couche d'informations (403) sert de contre-électrode pour une autre couche d'informations (401).

3. Support d'informations selon la revendication 1, ledit support d'informations comprenant des microcuvettes et des méplats, où les microcuvettes sont remplies par le matériau fluorescent.

4. Support d'informations selon la revendication 1, dans lequel un seul et même matériau est utilisé comme matériau fluorescent et matériau électrochromique.

5. Support d'informations selon la revendication 1, dans lequel le matériau électrochromique a une capacité d'absorber ou relâcher des électrons, laquelle capacité peut être localement réduite par le moyen du faisceau optique de façon à écrire des informations sur la couche d'informations.

6. Support d'informations selon la revendication 1 ou 5, dans lequel le matériau fluorescent a une capacité d'émettre de la lumière par fluorescence, laquelle capacité peut être localement réduite par le moyen du faisceau optique de façon à écrire des informations sur la couche d'informations.

7. Support d'informations selon la revendication 1, dans lequel la couche d'électrolyte (52, 56) a un seuil de mobilité qui dépend de la température.

8. Support d'informations selon la revendication 7, dans lequel la couche d'informations comprend en outre un matériau thermochromique qui, à la longueur d'onde du faisceau optique, a des propriétés optiques qui dépendent de la température.

9. Support d'informations selon la revendication 7 ou 8, dans lequel un empilement d'informations comprend en outre une couche photoconductrice (68, 69) pour permettre un transfert d'électrons dans la couche d'informations quand elle est éclairée à la longueur d'onde du faisceau optique.

10. Procédé pour lire des informations d'un support d'informations par le moyen d'un faisceau optique qui a une longueur d'onde, ledit support d'informations comprenant au moins deux empilements d'informations, où chaque empilement comprend une contre-électrode, une couche d'électrolyte et une couche d'informations, ledit procédé étant **caractérisé en ce que** la couche d'informations comprend un matériau fluorescent et un matériau électrochromique dont des propriétés optiques à la longueur d'onde du faisceau optique sont fonction d'une différence de potentiel appliquée entre la couche d'informations et la contre-électrode, le procédé comprenant les étapes d'appliquer une différence de potentiel entre la couche d'informations et la contre-électrode de l'empilement d'informations duquel des informations doivent être lues, et de focaliser le faisceau optique sur la couche d'informations dudit empilement.

11. Procédé pour enregistrer des informations sur un support d'informations par le moyen d'un faisceau optique qui a une longueur d'onde, ledit support d'informations comprenant au moins deux empilements d'informations, où chaque empilement comprend une contre-électrode, une couche d'électrolyte et une couche d'informations, ledit procédé étant **caractérisé en ce que** la couche d'informations comprend un matériau fluorescent et un matériau électrochromique dont les propriétés optiques à la longueur d'onde du faisceau optique sont fonction d'une différence de potentiel appliquée entre la couche d'informations et la contre-électrode, le procédé comprenant l'étape de focaliser le faisceau optique sur la couche d'informations de l'empilement d'informations sur laquelle des informations doivent être enregistrées, de façon à réduire localement la capacité à absorber ou relâcher des électrons du matériau électrochromique et / ou la capacité du matériau fluorescent à émettre de la lumière par fluorescence.

12. Procédé pour enregistrer des informations sur un support d'informations par le moyen d'un faisceau optique qui a une longueur d'onde, ledit support d'informations comprenant au moins deux empilements d'informations, où chaque empilement comprend une contre-électrode, une couche d'électrolyte qui a un seuil de mobilité qui dépend de la température et une couche d'informations, ledit procédé étant **caractérisé en ce que** la couche d'informations comprend un matériau fluorescent et un matériau électrochromique dont les propriétés optiques à la longueur d'onde du faisceau optique sont fonction d'une différence de potentiel appliquée entre la couche d'informations et la contre-électrode, le procédé comprenant les étapes de focaliser le faisceau optique sur la couche d'informations de l'empilement d'informations sur laquelle les informations doivent être enregistrées de façon à chauffer localement la couche d'électrolyte dudit empilement au-dessus dudit seuil de mobilité, et d'appliquer une différence de potentiel entre la couche d'informations et la contre-électrode dudit empilement.

13. Procédé pour effacer des informations d'une couche d'informations sur laquelle des informations ont été enregistrées selon le procédé selon la revendication 12, ledit procédé pour effacer étant **caractérisé en ce qu'**il comprend les étapes de chauffer la couche d'électrolyte dudit empilement au-dessus dudit seuil de mobilité par le moyen du faisceau optique, et d'appliquer une différence de potentiel inverse entre la couche d'informations et la contre-électrode dudit empilement.
